# EUROPEAN PATENT APPLICATION

(11) **EP 2 768 250 A1**
(43) Date of publication of application: **20.08.2014**
(21) Application number: 14153750.6
(22) Date of filing: 04.02.2014
(51) Int. Cl.: H04W 4/18, H04W 88/08, H04L 29/08, H04W 36/00

(54) **Method and Apparatus for Receiving Information From a Communications Network**

(30) Priority: 15.02.2013 US 201313768675
(71) Applicant: General Dynamics Broadband Inc, San Francisco, CA 94105 (US)
(72) Inventor: Howard, Paul, Bristol, BS7 8SB (GB)
(74) Representative: Optimus Patents Ltd

(57) **Abstract**

A network element for communicating with a wireless communication unit is described. The network element comprises: a transceiver for communicating with the wireless communication unit; an interface for operably coupling to a data store; and a control processor. The control processor is operably coupled to the interface, and arranged to: intercept a communication from the wireless communication unit to a second network element, inspect the communication to determine whether the communication relates to a request for a first item of information; request the first item of information from the data store, wherein the control processor is further arranged to not forward the request for the first item of information to the second network element if it is determined that first item of information is stored in the data store;receive the first item of information from the data store; and transmit the first information to the wireless communication unit.

## Description

### Field of the Invention

The field of this invention relates to wireless communication units, and in particular to mobile/wireless communication units for receiving information from a communication network, for example via one or more transparent storage devices.

### Background of the Invention

A recent development in third generation (3G) wireless communications is the long term evolution (LTE) cellular communication standard, sometimes referred to as 4^{th} generation (4G) systems. Each of these technologies is compliant with the third generation partnership project (3GPP™) standards. These 4G systems will be deployed in existing spectral allocations owned by Network Operators and new spectral allocations that are yet to be licensed. Smart phone usage continues to escalate and, as such, mobile communications systems are delivering increasing amounts of data to devices compliant with these technologies. Users of these devices are also increasingly using their mobile connection to access over-the-top services from providers outside the domain of the mobile communications system operator. In some instances, it may be that a future use of mobile communication systems will be that of a provider of internet access. Traditional voice and messaging services will continue to be in demand; however the volume of data delivered from/to the internet will most likely dominate the resource bandwidth usage within the mobile communications system infrastructure. Therefore there is a need to optimise mobile communications systems for the increase in data delivered from/to the internet.

Caching is one technology that could be used to improve the efficiency of mobile communications systems for delivering internet content to its users.

Caching is traditionally employed in fixed internet infrastructures. In these fixed internet infrastructures, caches are widely employed to limit traffic flowing across the network at any instant in time. Caches provide an efficient solution because a large proportion of the traffic is so called 'popular content', i.e. the same content being accessed by a plurality of different users. For example, for popular content, copies of frequently requested objects may be stored on many cache servers distributed across the internet. Therefore, when a user requests a data object, the data object may be delivered on behalf of the origin server by a cache that is topologically and/or geographically close to the user. Typically, the network is interested in minimising a number of hops needed to reach the data source. Hence, a cache may be geographically close and/or topologically close, for example a cache may be located at a university IT centre in order to serve the campus, but users on their phones will not necessarily be topologically close to the university server, even in the case where they are located in the campus - it is likely that the cache serving the mobile phone will be geographically distant. Hereafter, to avoid obfuscation to the reader, the term topologically is used to encompass topologically and/or geographically.

Thus, in fixed internet infrastructures, caching can reduce the traffic load on an origin server, as many different users can request popular data from caches. Further, the required data content can be provided to a user from a cache that is topologically close to the user, thereby reducing latency and increasing the speed at which the user receives the requested information.

### Summary of the Invention

The present invention provides wireless communication units and a method of operation as described in the accompanying claims. Specific embodiments of the invention are set forth in the dependent claims. These and other aspects of the invention will be apparent from and elucidated with reference to the embodiments described hereinafter.

### Brief description of the drawings

FIG. 1 illustrates a simplified example implementation of a mobile network with core network elements based on the Evolved Packet Core (EPC) architecture specified by 3GPP.
FIG. 2 illustrates an example of a simplified diagram of the architecture of the Internet.
FIG. 3 illustrates an example of a simplified diagram of the architecture of the Internet coupled to a mobile communications network.
FIG. 4 illustrates an example of a simplified diagram of storage devices implemented within a mobile communications network.
FIG. 5 illustrates an example of a simplified diagram of a transparent cache inserted in-line with a network.
FIG. 6 illustrates an example of a simplified flow diagram of the network defined in FIG. 4
FIG. 7 illustrates an example of a simplified diagram of an interception transparent cache situated at an eNodeB.
FIG. 8 illustrates an example of a simplified block diagram of a PDCP/GTP-u interface situated within an eNodeB, according to an example embodiment of the invention.
FIG. 9 illustrates an example of a simplified block diagram of a transparent storage device implemented within a mobile communications system, according to an example embodiment of the invention.
FIG. 10 illustrates an example of a simplified block diagram of user plane data flow before a handover, according to an example embodiment of the invention.
FIG. 11 illustrates an example of a simplified block diagram of user plane data flow after a handover, according to an example embodiment of the invention.
FIG. 12 illustrates an example of a simplified block diagram of functional elements of an eNodeB and transparent storage device involved in user plane packet transfer, according to an example embodiment of the invention.
FIG. 13 illustrates an example of a simplified flow diagram of a transparent storage device serving an eNodeB, according to an example embodiment of the invention.
FIG. 14 illustrates an example of a simplified flow diagram of a source eNodeB, according to an example embodiment of the invention.

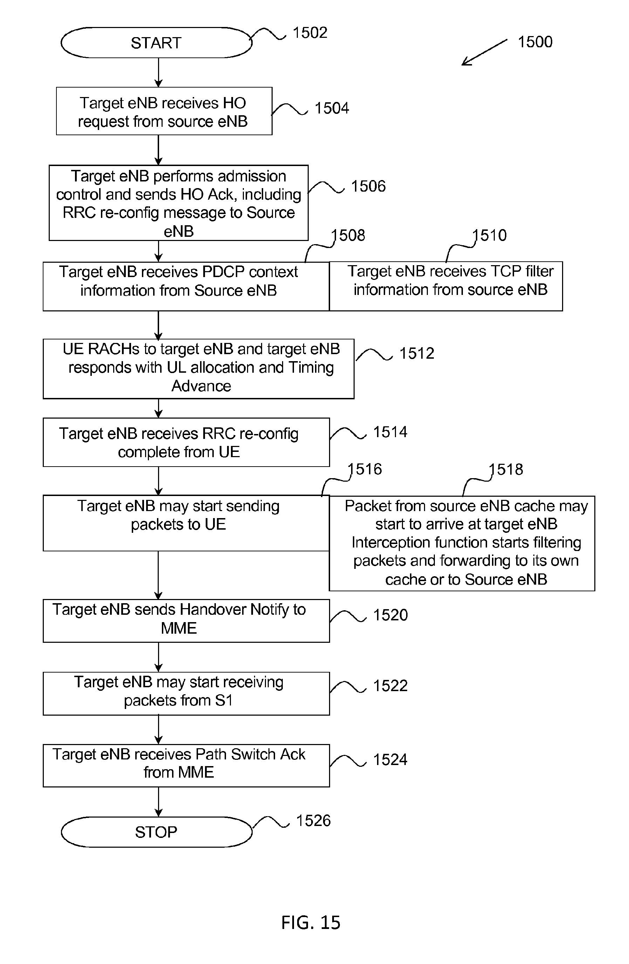

FIG. 15 illustrates an example of a simplified flow diagram of a target eNodeB, according to an example embodiment of the invention.
FIG. 16 illustrates an simplified example of the elements of an interception function resident in an eNodeB and its interaction with other elements of mobile communications system.
FIG. 17 illustrates a simple example of a typical computing system that may be employed to implement signal processing functionality in embodiments of the invention.

### Detailed description

Examples of the invention provide communication units, associated integrated circuits and methods for a network element to communicate with a wireless communication unit. In some examples, the network element comprises a transceiver for communicating with the wireless communication unit; an interface for operably coupling to a data store; and a control processor, operably coupled to the interface. The control processor is arranged to: intercept a communication from the wireless communication unit to a second network element, inspect the communication to determine whether the communication relates to a request for a first item of information; request the first item of information from the data store, wherein the control processor is further arranged to not forward the request for the first item of information to the second network element if it is determined that first item of information is stored in the data store; receive the first item of information from the data store; and transmit the first information to the wireless communication unit.

In some examples, the first network element may be a source base station, such as a source eNodeB, and the second element may be a origin content server.

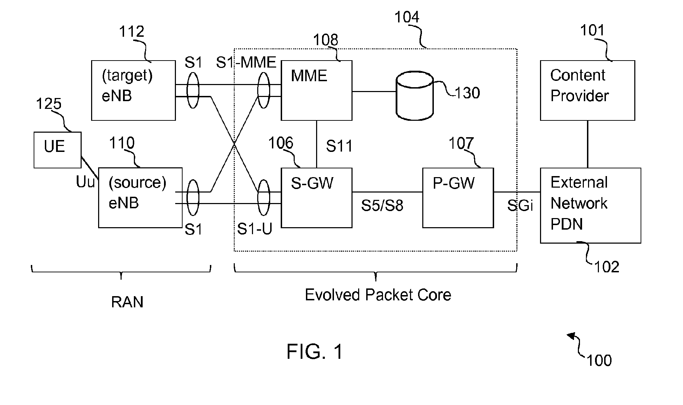

Referring now to FIG. 1, a wireless communication system 100 is shown in outline, in accordance with one example embodiment of the invention. In this example embodiment, the wireless communication system 100 is compliant with, and contains network elements capable of operating over, a universal mobile telecommunication system (UMTS™) air-interface. In particular, the embodiment relates to a system's architecture for an Evolved-UMTS Terrestrial Radio Access Network (E-UTRAN) wireless communication system, which is currently under discussion in the third Generation Partnership Project (3GPP™) specification for long term evolution (LTE), based around OFDMA (Orthogonal Frequency Division Multiple Access) in the downlink (DL) and SC-FDMA (Single Carrier Frequency Division Multiple Access) in the uplink (UL), as described in the 3GPP™ TS 36.xxx series of specifications.

The wireless communication system 100 architecture consists of radio access network (RAN) 112 and Evolved Packet Core (EPC) elements 104, with the Evolved Packet Core elements 104 being coupled to external networks (referred to as Packet Data Networks (PDNs) 102), such as the Internet or a corporate network. In this example, the PDN 102 may be further coupled to a content provider 101, for example an Origin Server. In this example, the P-GW 107 is operably coupled to a PDN 102 via a SGi interface. The P-GW 107 is further coupled to a Serving Gateway (S-GW) 106, in this example, via an S5/S8 interface (where the S8 interface is used for roaming where S-GW is in a visited network).

In example embodiments, the S-GW 106 is coupled to, at least, a mobility management entity MME 108 via an S11 interface. Further, the S-GW 106 may be operably coupled to at least one of a source eNodeB 110 and a target eNodeB 112 via, for example, S1-U interfaces. The MME 108 is operable to manage session control of user plane data bearers and may be operably coupled to a home subscriber server (HSS) database 130 that may be arranged to store subscriber communication unit 125 (e.g. user equipment (UE)) related information. As illustrated, the MME 108 also has a direct connection to each eNodeB 110, 112, via an S1-MME interface, which is used for control plane signalling.

The HSS database 130 may store UE subscription data, such as Quality of Service (QoS) profiles and any access restrictions for roaming. The HSS database 130 may also store information relating to the P-GW 107 to which a UE 125 can connect. For example, this data may be in the form of an access point name (APN) or a packet data network (PDN) address. In addition, the HSS database 130 may hold dynamic information relating to the identity of the MME 108 to which a UE 125 is currently connected or registered.

The MME 108 may be further operable to control protocols running between the user equipment (UE) 125 and the EPC elements 104, which are commonly known as Non-Access Stratum (NAS) protocols. The MME 108 may support at least some of the following functions that can be classified as: functions relating to bearer management (which may include the establishment, maintenance and release of bearers), functions relating to connection management (which may include the establishment of the connection and security between the network and the UE 125) and functions relating to inter-working with other networks (which may include the handover of voice calls to legacy networks). The S-GW 106 predominantly acts as a mobility anchor point and is capable of providing internet protocol (IP) multicast distribution of user plane data to eNodeBs 110, 112. The S-GW 106 may receive content via the P-GW 107, from one or more content providers 101 or via the external PDN 102.

The P-GW 107 is operable to determine IP address allocation for a UE 125, as well as QoS enforcement. The P-GW 107 is further operable to control the filtering of downlink user IP packets into different QoS-based bearers (not shown). The P-GW 107 may also serve as a mobility anchor for intra 3GPP™ roaming and inter-working with non-3GPP technologies, such as CDMA2000 and WiMAX networks. A network may contain multiple P-GWs 107, where each P-GW may provide connectivity into different external networks, for example the public internet, Operator IP multimedia subsystem (IMS), or other network. A UE 125 may have simultaneous connections to multiple P-GWs 107, in which case the UE is assigned different IP addresses for each P-GW connection.

In this example, the eNodeBs 110, 112 are connected to the S-GW 106 and the MME 108 directly. In this case, all UE packets are transferred through the S-GW 106, which may serve as a local mobility anchor for the data bearers when a UE 125 moves between eNodeBs 110, 112. The S-GW 106 is also capable of retaining information about the bearers when the UE 125 is in an idle state (known as EPS connection management IDLE), and temporarily buffers downlink data whilst the MME 108 initiates paging of the UE 125 to re-establish the RAN bearers. In addition, the S-GW 106 may perform some administrative functions in the visited network when the UE 125 is roaming, such as collecting information for charging (i.e. the volume of data sent or received from the UE 125). The S-GW 106 may further serve as a mobility anchor for inter-working with other 3GPP™ technologies such as GPRS™ and UMTS™.

The main component of the RAN is an eNodeB (an evolved NodeB) 110, 112, which performs many standard base station functions and is connected to the EPC 104 via an S1 interface and to the UEs 125 via a Uu interface. A wireless communication system will typically have a large number of such infrastructure elements where, for clarity purposes, only a limited number are shown in FIG. 1. The eNodeBs 110, 112 control and manage the radio resource related functions for a plurality of wireless subscriber communication units/terminals (or user equipment (UE) 125 in UMTS™ nomenclature).

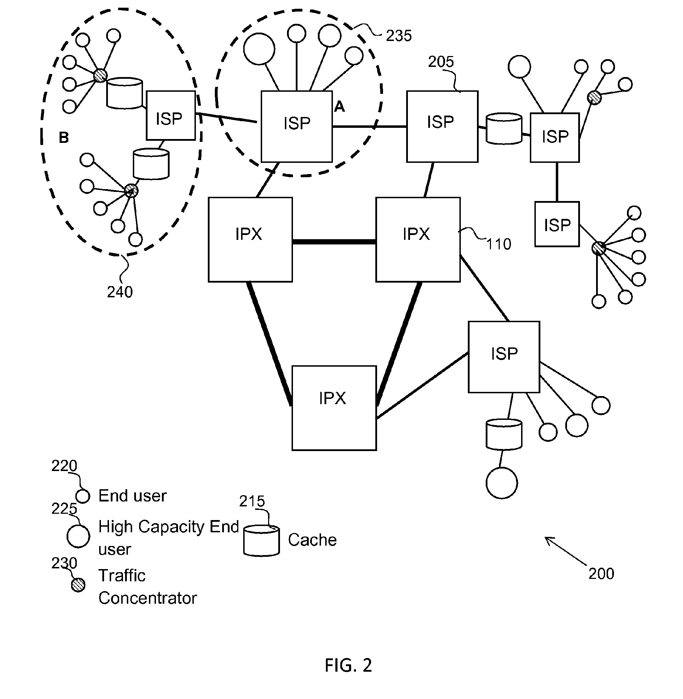

FIG. 2 illustrates a simplified schematic diagram representing the internet 200 comprising, internet service providers 205, internetwork packet exchanges 210, caches 215, end users 220, high end users 225 and traffic concentrators 230. Internet service providers 205 can be interconnected to each other via internetwork packet exchanges 210. Internet service providers allow end users 220 and high end users 225 to access the internet, either directly from the internet service providers 205, via a cache 215, via a traffic concentrator 230 or any suitable means. The relative position of the caches 215 in the internet 200 affect the speed at which data can be downloaded by end users 220 and high end users 225. For example, area A 235 does not have a cache topologically close to the end users 220 and high end users 225. An origin server (not explicitly shown) which may be any one of the users that can be viewed either as the client (consumer) or the server (provider) of the data, may therefore be heavily loaded by many (other) users 220, 225 potentially requesting the same data objects multiple times. Area B 240 illustrates caches 215 located between an internet service provider 205 and traffic concentrators 230. In this case, latency is improved compared to area A as the caches 215 are located topologically close to the end users 220, 225, and are, in some instances, able to supply the users 220, 225 with the requested data objects without having to request them from the origin server.

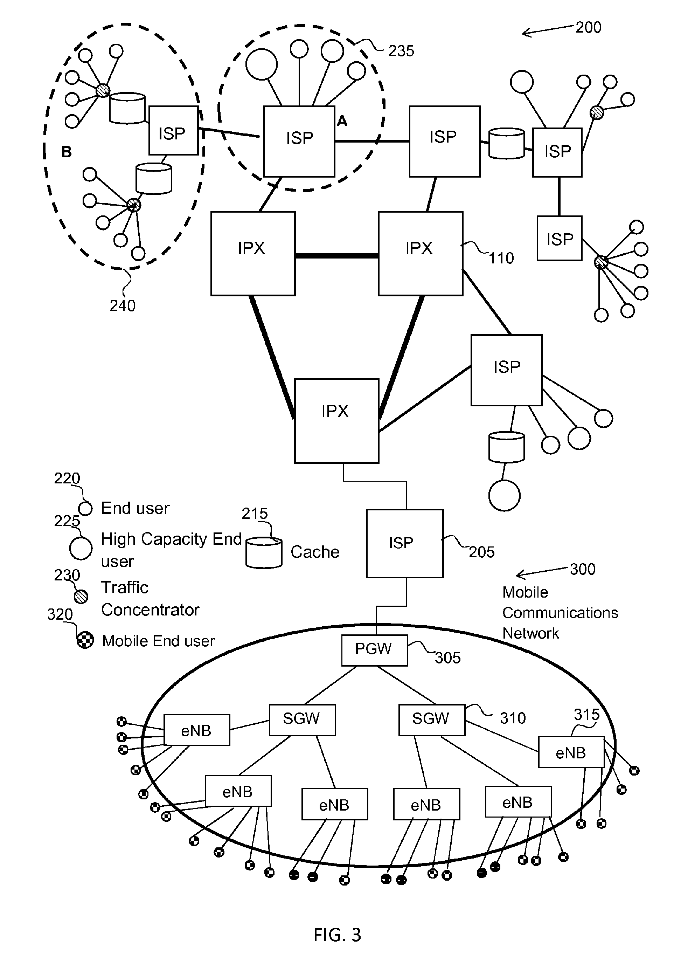

FIGs 3 to 5 describe example embodiments of the present invention with regard to fixed networks whereby a client device is always connected to the same transparent cache during at least one data request.

FIG. 3 illustrates a simplified schematic of a mobile communications network 300 connected to the internet 200. The simplified schematic of the internet part is substantially the same as that illustrated in FIG. 2, and therefore only the operation of the mobile communications network 300 will be described in detail. Mobile communications network 300 comprises: a packet data network gateway (P-GW) 305, a plurality of serving gateways (S-GW) 310, a plurality of eNodeBs (eNodeB) 315 and a plurality of mobile end users 320. The P-GW 305 connects the mobile communications network 300 to the internet 200. When a mobile end user 320 requests an object from the internet, this request must travel through the mobile communications network 300, via an eNodeB 315, an S-GW 310 and the P-GW 305, until it reaches an internet service provider (ISP) 205. Subsequent data transmitted from internet service provider 205 must therefore travel back through the mobile communications network. Hence it can be seen that implementing caches in such a mobile communications network 300 could dramatically decrease latency and speed up the transfer of data between the internet 200 and mobile end users 320.

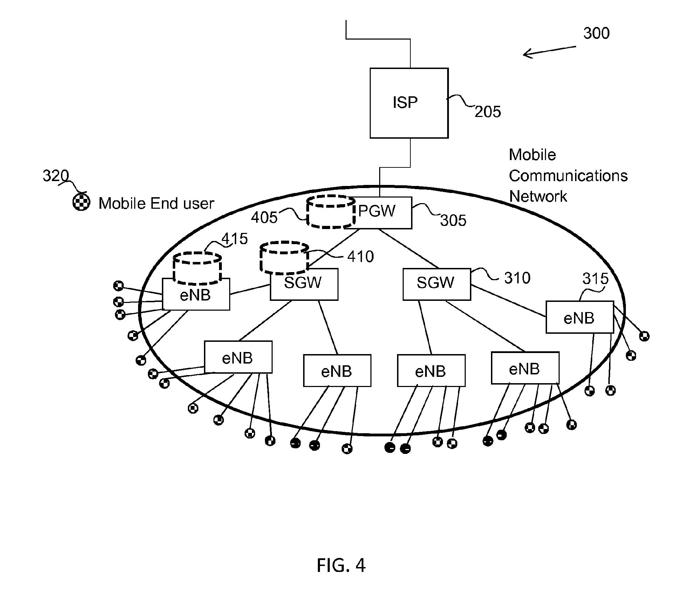

FIG. 4 illustrates the simplified mobile communications network 300 of FIG. 3, with the addition of possible locations for caches 405, 410 and 415, according to example embodiments of the invention. Advantageously, implementing a cache 405 at P-GW 305 allows the cache 405 to serve the entire population of end users 320 that use the packet data network connection. This will result in maximising the effectiveness of the cache 405 in terms of cache 'hits', as a larger population of potential end users 320 may maximise the probability that a given object may be requested multiple times. Placing a cache 405 at P-GW 305 to store objects of interest to end users of the mobile communications network 300 will also be effective in reducing the volume of traffic requested from the ISP 205 and transported from the internet (not shown). However, cache 405 will not impact the volume of traffic transported across the rest of the mobile communications network 300.

Alternatively and/or additionally, implementing a cache 410 at an S-GW 310 provides a cache solution closer to the mobile end users 320. This will allow a mobile systems operator to reduce the infrastructure cost that supports the link between the S-GW 310 and P-GW 305 by allowing the cache to serve popular objects without needing to traverse the P-GW 305. In instances where S-GWs 310 are co-located with the P-GW 305, the cost benefits of placing cache 410 at the S-GW are negligible.

Alternatively and/or additionally, implementing a cache 415 at eNodeB 315 provides a cache solution even closer to the mobile end users 320. Placing the cache 415 at the eNodeB further reduces the traffic that is transported across the mobile network by serving popular content directly from the eNodeB.

A drawback with implementing a cache 415 at an eNodeB 315 is that mobile end users 320 are inherently mobile. As such, mobile end users 320 will transition between eNodeBs 315 that they are communicating with as they move around the mobile communications network 300. Therefore, in order to benefit from a reduction in traffic, obtained by situating a cache 415 at an eNodeB 315, a novel technique for storing and delivering data content is required. In particular, a technique is required to enable a mobile end user 320 to be able to receive cached data from both a serving eNodeB 315 and another eNodeB 315 following a communication hand over with a substantially seamless transition. For example, if a mobile end user 320 is streaming video from eNodeB-A, and the mobile end user 320 is handed over to eNodeB-B, a mechanism is required for the cached information to be redirected from eNodeB-A to eNodeB-B.

As briefly discussed above, caching systems rely on distributing content across the internet using a number of servers that are topologically distant. An end user is ideally served content from a single server that is topologically close, rather than always having the data delivered from an origin server. This can be achieved in a number of ways. For example, a content delivery network (CDN) can be utilised, where the content is managed by the CDN provider. In this case, the origin server deliberately routes requests for content to the CDN, which uses proprietary techniques to resolve the optimum cache server to use for a given user. The CDN typically utilises users IP addresses, route traces and footraces along with specialised domain name system (DNS) look up systems in order to select the cache server to use.

A problem with using a CDN system for a mobile communications network is that the CDN system will be located in the internet domain, and therefore will not have visibility of the mobile communication system's architecture. Thus, a CDN system would not be able to recommend a suitable cache server inside the mobile communication system for the mobile end user 320 to use. Further, CDN operators generally charge content providers for hosting and streaming content in exchange for improved delivery service, thereby increasing the cost of implementing such a system to the content provider.

In order to utilise a CDN system, a form of interworking between the mobile communications system operator and the CDN provider is desired. This would typically involve the CDN provider making use of cache servers distributed throughout the mobile communication system and an interface to the HSS that is able to inform the CDN about the current location of end users and, hence, allow the CDN to select the best cache server from which to deliver content.

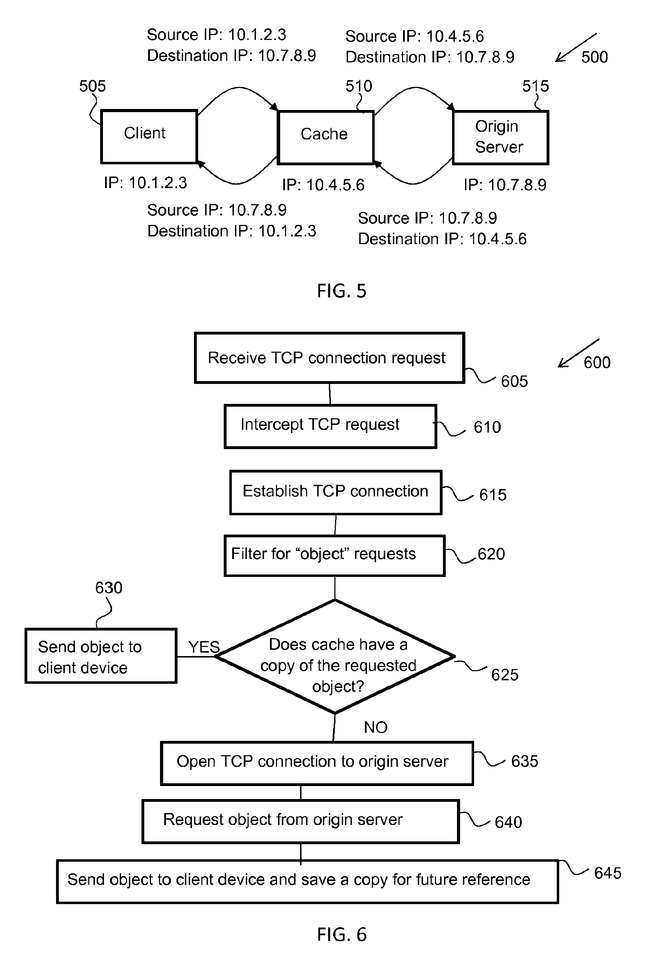

An example of an alternative caching system that may avoid the need for close co-operation between the mobile network operator and the CDN provider is illustrated in FIG. 5. This figure illustrates a transparent cache system 500, comprising client device (user equipment) 505, transparent cache 510 and origin server 515. A transparent cache system 500 is usually not explicitly managed, and the content provider is not usually aware of, or billed for, content that is distributed by a cache, as is generally the case for a CDN system. Instead, a transparent cache system 500 is usually installed for the benefit of the transport network provider as they reduce bandwidth requirements and transit charges. Transparent cache systems 500 are particularly useful where network providers are delivering 'over-the-top' services.

Referring to FIG. 5, a transparent cache 510 is inserted 'in-line' with the traffic flow at an aggregation point near the edge of the network, for example between a client device 505 and an origin server 515. As requests for data objects arrive from the client device 505, the transparent cache 510 examines the request and serves the content to the client device 505 directly if the transparent cache 510 has a copy of the requested object. In this manner there is no need for the transparent cache 510 to forward the request to the origin server 515 if the transparent cache 510 has a copy of the requested object. If the transparent cache 510 does not have a copy of the object, it requests it from the origin server 515 and stores a copy for future use before forwarding the object to the client device 505. In some examples the transparent cache 510 may be configured to accept traffic from any IP address, and may therefore accept traffic intended for the origin server 515. In order for the transparent cache 510 to function correctly, it is preferably located in-line with the routing path used between the client device 505 and the origin server 515.

Transparent cache systems, like the example illustrated in FIG. 5, are frequently used to deliver content to web browsers where HTTP messages are transported using transmission control protocol (TCP). Hence, the transparent cache 510 must terminate the TCP connection from the client device 505 in order to read the HTTP requests. In some examples of the invention the origin server 515 does not explicitly authorize the transparent cache 510 to do this; rather, the transparent cache 510 accepts TCP connections for origin server 515 without its direct knowledge. In order to achieve this, the transparent cache 510 may be either directly in-line with the client device 505 and the origin server 515, or the underlying transport network (not shown) may use a layer 7 switch which can redirect potential traffic to the transparent cache 510. FIG. 5 illustrates an operation whereby the transparent cache 510 intercepts and terminates a TCP connection. Notably, in this example, the transparent cache utilises its own IP address when contacting the origin server 515. Initially, the client device 505 may request object data from the origin server, via a TCP connection, using IP address 10.1.2.3 in this example. The transparent cache 510 intercepts this request and, in this case, forwards the request on to the origin server 515 using the IP address (10.4.5.6) of the transparent cache 510. The origin server 515 then transmits the requested data to the transparent cache 510 using the destination address of the transparent cache 510, thus ensuring that the transparent cache 510 is the intended recipient of the response. The transparent cache 510 then forwards the requested data onto the client device 505 using the destination address of the client device 505 and the source address of the origin server 515. In this manner, the client device 505 believes that it is being served directly from the origin server 515. In this example, the origin server 515 is not aware of the client device 505, and only relays information to the transparent cache 510. The transparent cache in this example is acting as a proxy; the intended connection between the client 505 and the origin server 515 is replaced by a connection between the client 505 and transparent cache 510 and a connection between the transparent cache 510 and the origin server 515. Note that while this example shows Internet Protocol version 5 (IPv4) addresses, the use of Internet Protocol version 6 (IPv6) is equally applicable.

Referring now to FIG. 6, a simplified example flow chart is illustrated that describes interaction between a client device (such as client device 505 of FIG. 5), transparent cache system 600 and origin server, such as origin server 515 of FIG. 5. Initially, the transparent cache system 600 receives a TCP connection request 605 from the client device destined for specific TCP port, e.g. port 80 in this example embodiment, which is often the default port number used for HTTP, of the origin server. The transparent cache system 600 intercepts this TCP request 610 and accepts the TCP session on behalf of the origin server. In this example embodiment, the origin server has not, explicitly or implicitly, given permission to the transparent cache system 600 to intercept the TCP request. In other example embodiments, the origin server 515 may give the transparent cache system 600 permission to intercept the TCP request or the client device may intentionally direct requests to a proxy. The transparent cache system 600 creates a connection 615 between itself and the client device, which can be used, in this example embodiment, to transfer HTTP data from the client device to the transparent cache system 600. The transparent cache system 600 then receives HTTP requests from the client device, and filters the requests to determine requests for 'objects' 620. The transparent cache system 600 then determines whether it has a copy of the requested object 625. If the transparent cache system 600 has a copy of the requested object, the transparent cache system 600 returns the object 630 to the client device without contacting the origin server. If the transparent cache system 600 does not have a copy of the object, the transparent cache system 600 opens a TCP connection 635 to the origin server. The transparent cache system 600 then requests the object 640 from the origin server, and transmits the object to the client device as well as saving a copy of the object for future reference 645. In other example embodiments, the transparent cache system 600 may first perform a validity check on one or more items, for example check the freshness of items/objects it has in its store before forwarding to the client device. The validity check/freshness may be determined by any number of means comprising, but not limited to, one or more of the following; absolute age of the object (for example based on a time-stamp or a specific action defined in the item/object or a part of its header), for example checking the age against a time threshold or maximum age of the item/object, a length of time that the object has been stored in the cache without being updated, a number of times an item/object has been requested, information contained in a cache-control header associated with the object that explicitly defines freshness criteria, or an enquiry back to the origin server.

It has already been identified above that implementing a cache at an eNodeB may allow a reduction in traffic across the mobile core network, thereby allowing a subsequent reduction in the cost of backhaul infrastructure in transporting eNodeB traffic throughout the mobile communications system. Referring to the two cache systems discussed above, namely CDN and transparent caches, the transparent cache system may be more applicable for implementing a cache at an eNodeB. For example, a transparent cache system may be suited to the delivery of mapping and/or satellite images to UEs, for example. A given eNodeB is likely to deliver images of the surrounding area a number of times to a number of different UEs. These images are likely to relate to the position of the eNodeB, and therefore these images are unlikely to change significantly with time. Therefore, caching this data at the eNodeB will most likely reduce the traffic transported by the mobile communications network, thereby increasing speed, and providing cost savings for the network operator, CDN networks are not required in this example.

It is standard practice for HTTP transfers that utilise fixed networks to use the same, persistent, TCP connection for multiple requests and transfers. Non-persistent TCP connections may be used for the retrieval of a single object only. If a web page requires many objects to be transferred, then a separate non-persistent TCP connection is established for each object. For web pages that have a rich media content it may be necessary to perform many TCP connections in order to download the entire page. Persistent TCP connections are not closed by the origin server once the object has been sent, but instead remain open for the client device to send more requests. This may improve efficiency at both the client device and the origin server as there is no need to keep opening a closing TCP sessions for every object (the overhead associated with opening multiple TCP connection can be significant if the objects are small). The use of persistent HTTP connections may cause difficulties for a transparent cache implementation if the above system is to be integrated within a mobile communications system, especially if the transparent cache is to be implemented at an eNodeB. This is because as a UE moves between eNodeBs in the mobile communications network, the routing path within the mobile communications system will also inevitably change. Therefore, the transparent cache may no longer be 'in-line' with the UE and origin server and thus be unable to transmit objects between the origin server and UE with which it has established TCP connections.

Another potential issue in some scenarios is that any new TCP connections requested by the UE, once it has moved to a different eNodeB, will be made between the UE and the cache associated with the different eNodeB. Thus, the existing TCP connections between the UE and the previous cache, and the subsequent TCP connections between the previous cache and the origin server, may be left in an 'orphaned' state. This is not ideal as the termination of the TPC connections requires clean-up actions at the UE, the cache and the origin server to remove these left over connections when the UE changes eNodeB. Also, in one example, the behaviour of the UE in response to incorrectly terminated TCP connections is under application control, and may result in unpredictable responses, thereby reducing the quality of experience for the user.

Therefore, there is a need to modify the currently defined transparent cache system for fixed networks to allow it to be utilised in mobile communications networks. More specifically, in one example, the transparent cache may need to be kept in-line with the UE and origin server when the UE changes eNodeB, until open TCP connections (particularly persistent TCP connections) between the UE and the transparent cache and open TCP connections between the transparent cache and the origin server are closed.

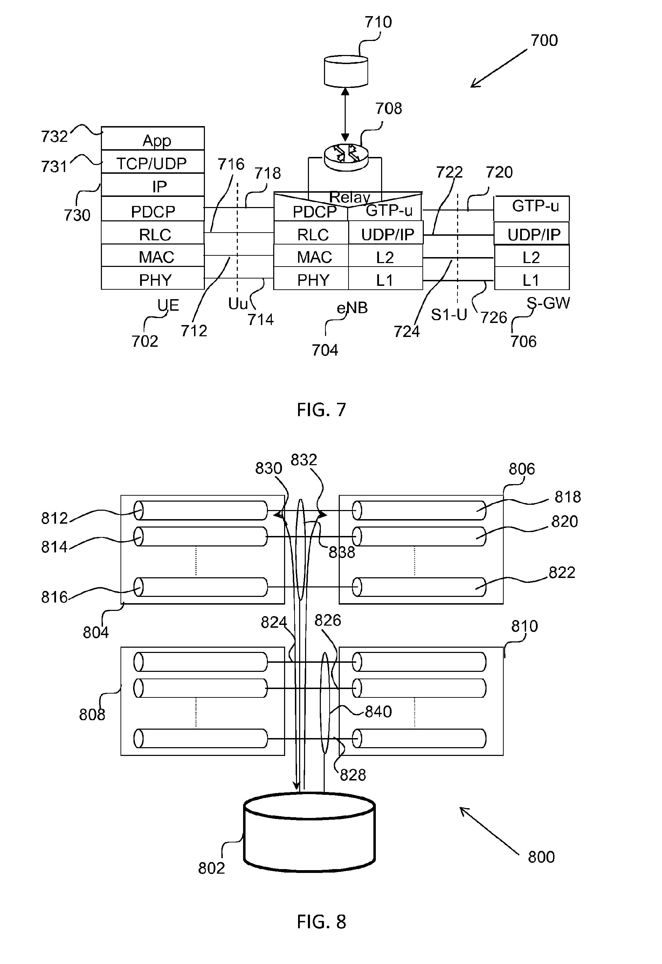

FIG. 7 illustrates an interception transparent cache 710 situated at an eNodeB 704 according to an example embodiment 700 of the invention. In this example embodiment, the eNodeB 704 is part of an LTE radio access network. FIG. 7 comprises UE 702 operably coupled to eNodeB 704 via an air interface supporting a number of protocol layer communications, such as 712, 714, 716 and 718. The eNodeB 704 comprises transparent storage device 710 operably coupled to eNodeB 704 via a interception element 708. In this example embodiment, interception element 708 comprises functionality described below. In other embodiments, the interception element 708 may be, say, a Layer-4 switch designed to intercept transmission control protocol (TCP) data from the UE 702 and flows through the eNodeB 704 or an internet protocol (IP) switch. The eNodeB 704 is further operably coupled to serving gateway (S-GW) 706 via an interface supporting a number of protocol layer communications, such as a GPRS tunnelling protocol (GTP-u) layer 720, a user datagram protocol over internet protocol layer 722, a layer 2 (L2) interface 724 and a layer 1 interface 726, which together represent the underlying transport network of the mobile communications system

User plane data is generated and/or consumed by the application 732 running on the UE 702. This user plane data is routed to the origin server using transport layers 731, which in this example embodiment may be TCP, UDP or other accepted transport protocols. These user plane transport protocols operate over an IP layer 730 that is terminated by transport network nodes (not shown) that lie outside the mobile communications network. The mobile communication network forms part of the underlying transport for IP layer 730 that is transporting application level 732 data to the origin server (not shown). Data is routed between UE 702 and eNodeB 704 via protocol layers 712, 714, 716 and 718, which comprise dedicated protocols that operate between the UE 702 and eNodeB 704. In some example embodiments it may be possible to encrypt data across the above, for example at the PDCP layer, to prevent eavesdropping on the air-interface. In this example embodiment, un-encrypted user plane data is available at the transfer point between PDCP 718 and GTP-u tunnel 720 within the eNodeB 704. The PDCP layer 718 is the highest layer that exists between the eNodeB 704 and UE 702 for user plane data. The GTP-u layer 720 is the highest layer that exists between the eNodeB 704 and the S-GW 706.

The highest layer of the interface between the UE 702 and the S-GW 706 available in the eNodeB 704 is the point at which user plane data is relayed between PDCP layer 718 and GTP-u layer 720, is an example of a possible location for user plane data interception for storage in the transparent storage device 710. In this example embodiment, the internet protocol (IP) switch 708, implemented at the PDCP 718/GTP-u 720 interface, is operable to intercept traffic that matches traffic characteristics defined by the transparent storage device 710. In this example embodiment, the traffic to be intercepted is TCP traffic directed to port 80 (HTTP). In some example embodiments, traffic characteristics to be compared may comprise one or more of the following: Internet protocol related characteristics such as IP version number, IP source/destination address, differentiated services code point (DCHP)/flow class value, transport protocol number; transport protocol related characteristics such as transport transport protocol source/destination port number, transport protocol flags; application information such as headers items or application commands (for example GET used in HTTP).

In this example embodiment, the transparent storage device 710 is a logical element of the eNodeB 704. In another example embodiment, the transparent storage device 710 is physically part of the eNodeB 704. In yet another example embodiment, the transparent storage device is a stand-alone unit physically separate from the eNodeB 704.

FIG. 8 illustrates a block diagram of a PDCP/GTP-u interface 800 internal to eNodeB 604, according to an example embodiment of the invention, comprising, transparent storage device 802, first radio bearer group 804, first GTP-u block 806, second radio bearer group 808 and second GTP-u group 810, as there is a bearer group for each UE. In this example embodiment, first radio bearer group 804 and second radio bearer block 808 comprise a plurality of PDCP interfaces 812, 814, 816, which are operably coupled to corresponding GTP-u interfaces 818, 820, 822 of first GTP-u group 806 and second GTP-u block 810. In this example embodiment, the transparent storage device 802 is operable to intercept user plane data between radio bearer groups 804, 808 and GTP-u groups 806, 810.

In an example, the transparent storage device 802 is operable to intercept user plane data via at least one interception element. Interception elements 838, 840 are illustrated logically in FIG. 8. In this example, the elliptical groupings around connections between PDCP interfaces in first and second radio bearer group 804, 808 and GTP-u interfaces in first and second GTP-u group 806, 810 represent the logical function of interception elements 838, 840.

The transparent storage device 802 is operable to intercept application level user plane IP packets from each PDCP/GTP-u pairing, denoted 824, 826 and 828 for second radio bearer group 808 and second GTP-u group 810 (pairings 824, 826, 828 also apply to first radio bearer group 804 and first GTP-u group 806). In this example embodiment, traffic passing between radio bearer groups 804, 808 and GTP-u groups 806,710 is intercepted by the transparent storage device 802 if the traffic matches traffic characteristics defined by the transparent storage device 802. In this example embodiment, data transmitted between PDCP interface 812 and GTP-u interface 818 is intercepted 830 by transparent storage device 802. The transparent storage device 802 checks to see if it has a copy of the data requested by the PDCP interface 812. If the transparent storage device 802 does have a copy of the requested data, it transmits 830 the data object back to the same PDCP context 812, otherwise the transparent storage device 802 transmits 832 the original request to the paired GTP-u interface 818 for transport across the mobile core network (not shown) to the origin server. The transparent storage device 802 will also intercept traffic flowing from the origin server transported over the mobile core network (not shown) to allow it to store a copy of the data objects for future reference.

Referring back to FIG. 7, a potential problem with implementing the transparent storage device 710 at the interface discussed above may be that in a generic long term evolution (LTE)/evolved packet core (EPC) system, a UE 702 has a single IP address for each PDN connection. In this scenario, data for a single IP address may be transported on more than one bearer within the LTE/EPC system. Each bearer has specific quality of service characteristics that distinguish how traffic associated with each bearer is treated by the network. The mapping of user plane traffic to bearers in the core network is determined by packet filters in the P-GW, say P-GW 205 of FIG. 2. Further, each bearer has its own PDCP and GTP-u pairing.

The transparent storage device 710 is not aware of the packet filter settings at the P-GW. Therefore, in this example embodiment the transparent storage device may be configured to maintain correct mapping between the PDCP 718 and GTP-u 720 interfaces. In this example embodiment, traffic intercepted by the transparent storage device 710from the UE 702 for a given PDCP 718 entity may be passed to the matching GTP-u tunnel 720 for delivery to the origin server (not shown) if the traffic does not match any traffic characteristics defined by the transparent storage device 710. When the transparent storage device 710 is being used to deliver an object on behalf of the origin server (not shown), the data is sent to the UE 702, using the same bearer (PDCP context 718) that the request arrived on. The mobile network takes care of routing the traffic between the P-GW, S-GW and eNodeB 704 based on the IP address assigned to the UE 702. In order to ensure that any traffic from the origin server is routed to the transparent storage device 710 situated in the eNodeB 704, the TCP session between the transparent storage device and the origin server may be initiated with the IP address of the UE 702. Generally in a fixed network, as illustrated in FIG. 4, a TCP session is initiated between a cache and an origin server using the IP address of the cache, which ensures that the response from the origin server is routed back to the cache rather being directly routed to the client device. This is different behaviour, and, as such, the traditional operation of a fixed network is modified in order for a transparent storage device to be utilised in a mobile network.

To further elaborate on the above example problem, when the UE 702 performs a handover and moves between the current serving eNodeB 704 and a target eNodeB (not shown), the mobile network may route any new data packets that arrive at the P-GW to the target eNodeB, based on the IP address of the UE. Any new data packets that arrive for the UE 702 may be routed directly to the target eNodeB. In this manner, it is possible that data packets arriving from the PDN connection may be part of an on-going TCP connection between the transparent storage device 710 associated with the serving eNodeB 704 and an origin server within the internet. The transparent storage device associated with the target eNodeB will not recognise the TCP session (based on IP source/destination addresses and source/destination port numbers), and therefore the data packets will be passed to the UE 702, which similarly will not be able to recognise the TCP session due to the port number mis-match. Therefore these data packets will be discarded by the UE 702.

Similarly, traffic sent from the UE 702 on the TCP connection with the transparent storage device in the source eNodeB 704 will arrive at the target eNodeB and will not correspond with any TCP session at the transparent storage device in the target eNodeB. This will result in these data packets being passed on to the PDN connection and ultimately arrive at the origin server, which will discard the packets due to the mis-matched parameters.

The result is that any TCP connections between UE 702 and source transparent storage device 710 and between source transparent storage device 710 and origin server will be broken. These 'orphaned' sessions will be cleared out by the UE 702, the source transparent storage device 710 and the origin server after some timeout period. However, the orphaned sessions will, for some time before the timeout period, continue to use system resources and possibly result in undesirable behaviour in the application using the data in either the UE 702 or the origin server.

Therefore, in accordance with a further example embodiment, TCP sessions are forced to close by transmitting TCP FIN flags, where a FIN flag indicates the end of data transmission to terminate a TCP connection. In this example embodiment, the transparent storage device in the source eNodeB may be the entity that is configured to trigger the TCP closure. Applications in the UE and origin server may be configured to handle the situation of the TCP session being closed prematurely, which relies on the robust handling of the unexpected closure of the TCP sessions. Additionally, user interaction may be required in order to re-try requests that fail due to the termination of the TCP session, and this may cause a degraded user quality of experience (QoE). Further, the transparent storage device may be configured to transmit the TCP packets closing all open TCP sessions associated with a UE, before the GTP-u tunnel and PDCP contexts are 'torn-down', for example as part of the handover. This action may, for example, be based on a detailed interaction between the eNodeB and the transparent storage device whereby the FIN flags are inserted in the data queue with a higher priority than the handover message sent to the UE.

This procedure still does not allow the standard closure of the TCP sessions to complete, as the FIN flag needs to be answered by an acknowledgement (ACK) from the UE. Once the handover message has been sent to the UE any uplink packets (some of which may contain TCP ACK flags will be directed to the target eNodeB and cannot be intercepted by the transparent storage device in the source eNodeB. In order to allow the clean closure of all open TCP sessions with the transparent storage device, in some examples, it may be necessary to delay the sending of the handover message UE until the ACKs have been received from the UE. The delay in sending the handover message may result in poor air-interface performance for example if the network has already decided that the UE would be better off communicating to the target eNodeB. Poor air-interface performance may increase the likelihood of packet-loss and require re-transmission of packets containing TCP ACK flags, thus further delaying the transmission of the handover message to the UE. The extra delay may be avoided if the loss of the TCP ACK flags to the FIN flags can be tolerated. In some examples, it may be possible to modify the TCP stack in the transparent storage device in order to handle this expected behaviour. However, the TCP stack in the UE applications may not be relied on to have the required modification, and thus the TCP session in the UE may be left in an orphaned state thereby offering no significant improvement in quality of experience to the user. A similar situation exists for the TCP sessions existing between the transparent storage device and the origin server. The transparent storage device will become unreachable by the origin server once the handover procedure has completed and it is possible that on-going TCP session terminations may not complete correctly and result in undesired orphaned TCP sessions in the origin server.

Therefore, in another example embodiment, an attempt to maintain the TCP connections the transparent storage device has with the UE and the origin server may be provided. In order to maintain the connection between a target eNodeB and the transparent storage device 710 residing in the source eNodeB 704, details of the TCP sessions associated with the UE being handed over may be transferred as part of the handover preparation procedure that is used to prepare the resources on the target eNodeB.

In this example embodiment, in addition to typical information necessary for handover, such as radio resource control (RRC) context information and GTP-u tunnel endpoint identifiers, information relating to TCP sessions that are open and associated with the UE can be transferred on handover. This example embodiment assumes that there is modified TCP stack functionality in the target eNodeB that is able to accept internal TCP state machine parameters provided by the TCP stack function in the source eNodeB, and can thus be prepared to continue existing TCP connections seamlessly.

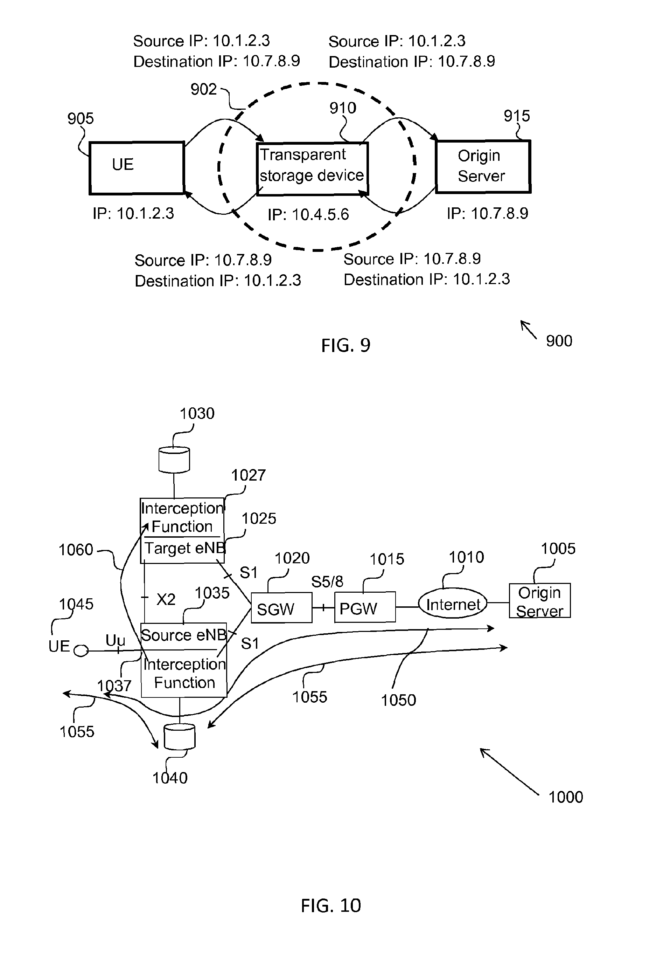

FIG. 9 illustrates a simplified overview of a further example embodiment. FIG. 9 illustrates a block diagram 900 of a simplified operation of a transparent storage device located within a mobile communications system 902 comprising, at least one UE 905 operably coupled to a transparent storage device 910, wherein the transparent storage device 910 is operably coupled to an origin server 915. Unlike in FIG. 4, the transparent storage device 910 utilises the source IP address of UE 905 when requesting data from the origin server 915. Therefore, the origin server 915 is given the IP address of the UE 905, from the transparent storage device 910, rather than the IP address of the transparent storage device 910. In this example embodiment, the IP address of the transparent storage device 910 is not reachable from outside the mobile core network as it is an element of the underlying transport network used to route traffic within the mobile core network. By using the IP address of the UE 905, any data destined for the transparent storage device will be routed by the mobile core network to the current location of the UE. Like the arrangement in FIG. 4, the transparent storage device 910 is acting as a proxy for the intended connection between UE 905 and origin server 915. Note that while this example shows Internet Protocol version 5 (IPv4) addresses, the use of Internet Protocol version 6 (IPv6) is equally applicable.

If there is a handover of the UE 905 to a different eNodeB, whilst data is still to be transmitted to the transparent storage device 910 from the origin server 915, the data will be routed to the different eNodeB, regardless of the logical or physical location of the transparent storage device 910. Thus, the control processor of the source eNodeB may be further arranged to transfer the at least one open proxy connection to a recipient entity (different eNodeB) identified in the handover decision.

FIG. 10 illustrates a block diagram of user plane data flow 1000 before a handover has been completed, with the data flow passing through an origin server 1005, the Internet 1010, P-GW 1015 and S-GW 1020. Each of the origin server 1005, the Internet 1010, P-GW 1015 and S-GW 1020 are operably coupled to each other in series. In another example embodiment, origin server 1005, the Internet 1010, P-GW 1015 and S-GW 1020 may be operably coupled to each other to support, say, Selected IP Traffic Offload (SIPTO) thereby allowing the connection of traffic to a PDN connection to be closer to the eNodeB, for example at the S-GW 1020.

FIG. 10 further comprises source eNodeB 1035, with an integrated interception function 1037, operably coupled to transparent storage device 1040. In addition, target eNodeB 1025 comprises an integrated interception function 1027, operably coupled to transparent storage device 1030. The eNodeBs 1025, 1035, in this example embodiment, are operably coupled to S-GW 1020 via S1 interfaces. In this example embodiment, UE 1045 is initially operably coupled to source eNodeB 1035 via air interface (Uu). Direct data flow between UE 1045 and origin server 1005 is supported via path 1050. Intercepted data flow between UE 1040 and origin server 1005 on path 1050 is diverted to the transparent storage device 1040 with the effective data path shown as 1055. Note that data flows 1050 and 1055 may be bidirectional. The UE 1045, in response to a message from the source eNodeB 1035, initiates a handover between source eNodeB 1035 and target eNodeB 1025. Data flow via path 1050 may be handled by the standard mobility procedures used in the mobile core network.

Data flow via path 1055 requires additional measures to be defined. The handover command from the source eNodeB 1035 triggers a handover procedure in the interception function 1027 located in the source eNodeB 1035 that causes it to collate information that, at least, identifies the open TCP session(s) that is/are associated with the UE 1045. This information may comprise, for example, data relating to the source and destination IP addresses and source and destination port numbers of any TCP sessions that exist between the UE and the transparent storage device 1040, data relating to the source and destination IP addresses and source and destination port numbers of any TCP sessions that exist between the transparent storage device and the origin server. Further, it may be necessary in some examples to collate object data within the cache associated with the source eNodeB 1035, as the target cache may not have a copy of the required object data. Note that this example embodiment uses TCP sessions, but the process is not limited to TCP sessions and in other example embodiments may use different transport protocols such as, but not limited to User Datagram Protocol (UDP), Stream Control Transmission Protocol (SCTP).

Once the required information has been collated by the interception function 1037 of the source eNodeB 1035, which may in some examples encompass the functionality of IP switch 708 in FIG. 7, it is transmitted 1060 to the interception function 1027 of the target eNodeB 1025. In some examples, the TCP session descriptions are transmitted 1060 as part of the handover preparation, along with information identifying the source eNodeB 1035, and the transparent storage device 1040 hosting the TCP (or other transport protocol) sessions.

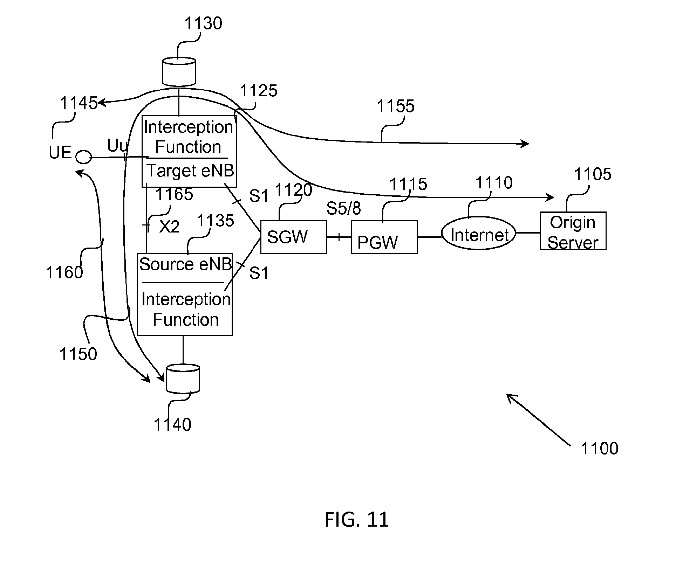

FIG. 11 illustrates a simplified block diagram of user plane data flow 1100 after a handover has been completed, for example a handover as described with reference to FIG. 10. As FIG. 11 is similar to that of FIG. 10, only additional information not present in FIG. 10 will be explained. Data flow on path 1050 has been transferred to path 1155 by standard mobility procedures used in the mobile core network. Upon receipt of the TCP session description 1060, the target eNodeB 1125 is operable to set up its PDCP/GTP-u interception function to intercept and forward information in communication path 1155, in this example embodiment packet data, that matches parameters in the TCP session description transmitted by the source eNodeB 1135 is intercepted and recognised as packets belonging to TCP sessions that were previously associated with the data flows path 1055 via transparent storage device in the source eNodeB 1140. The interception function in the target eNodeB 1125 is operable to forward these recognised packets from communication path 1155 to the interception function in the source eNodeB 1135 using communication path 1160 for packets sourced or destined for the UE 1145 and using communication path 1150 for packets sourced or destined for the origin server. Communication paths 1160 and 1150 are tunnelled between the target eNodeB 1125 and source eNodeB 1135 via an interface 1165. In this example embodiment, interface 1165 is an X2 interface defined by E-UTRA (LTE), over which signalling and user plane data are transferred. In another embodiment, interface 1165 may be any other suitable interface, including paths that use the S-GW or P-GW to route the data between the eNodeBs or other suitable direct communications paths. Any new TCP connections requested by the UE will be intercepted by the interception function in the target eNodeB and directed to the transparent storage device in the target eNodeB 1130. It should be noted that target eNodeB 1125 does not require a transparent storage device in order to accept a handover request, but it is necessary for the target eNodeB to have an interception function in order to allow the open TCP connections to be maintained without the risk of orphaned sessions.

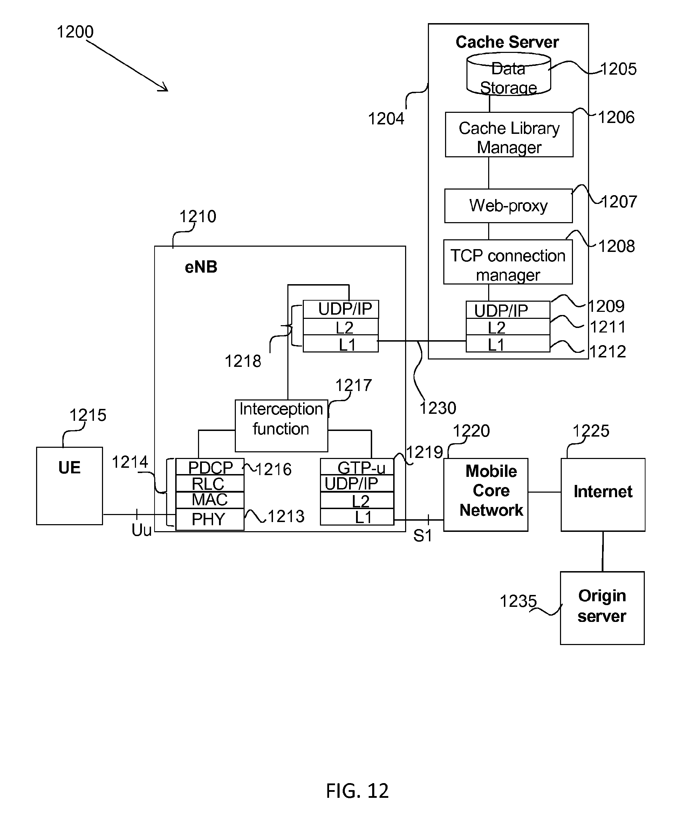

FIG. 12 illustrates a simplified block diagram 1200 of the functional elements of an eNodeB and transparent storage device involved in user-plane packet transfer. In this example embodiment, the transparent storage device is configured as a Cache server 1204, wherein the interface 1230 between the eNodeB 1210 and Cache server 1204 is illustrated as being IP-based, for example via an Ethernet connection. Further, in this example embodiment, the Cache server 1204 is physically separated from the eNodeB 1210. In another example embodiment, the Cache server 1204 may be a logical element within the eNodeB 1210. FIG. 12 illustrates a UE 1215 operably coupled to the eNodeB 1210 via a Uu interface, which in turn is operably coupled to a mobile core network 1220 via an S1 interface, which in turn is operably coupled to the internet 1225 and an origin server 1235 as shown. The Cache server 1204 comprises, data storage 1205 operably coupled to a Cache library manager 1206. The Cache library manager 1206 is operably coupled to a web-proxy 1207. The web-proxy 1207 is operably coupled to a TCP connection manager 1208, which is further operably coupled to encoding/ inspecting logic, which may be operational over a number of protocol layers, such as user data protocol (UDP)/IP interface 1209, layer-2 interface 1211 and layer-1 interface 1212.

Initially, in operation, UE 1215 requests a resource object from the origin server 1235, for example a web page or an object within a web page. The UE 1215 attempts to open a TCP connection with the origin server 1235 over which it can send an HTTP request. In this example the UE 1215 creates an IPv4 or IPv6 packet to carry the TCP connection request. In this example, the IP request packet has, at least, the destination address set as the IP address of the origin server 1235, the source address being set as the IP address of the UE 1215 and the protocol set to TCP (Protocol field = '6'). The TCP header, in this example, is constructed with the following characteristics:-
- Destination port = 80 (default HTTP port).
- Source port = typically selected from a range of dynamic port numbers, for example, 1024-5000, 49152-6536, 32768-61000, which are dependent on the operating system being used.
- SYN flag set to indicate this is the start of a request for a new connection.

The act of examining data packet headers for specific fields is referred to as 'deep packet inspection'. A packet filter refers to a specific combination of field values within the packet headers that can match packets with desired characteristics. The filter characteristics described above will match packets that carry TCP connection requests. Packets identified by this filter may be further examined for IP addresses and specific TCP port numbers to create more specific filters that match packets pertaining to specific TCP connections.

The UE 1215 transmits the IP packet containing the TCP message over the Uu radio interface and arrives at the eNodeB 1210. In this example, the IP packet arrives at the user-plane physical layer (PHY) interface 1213, before propagating through the user plane stack 1214 to the egress port of the PDCP layer 1216. The interception function 1217 located within the eNodeB 1210 examines the TCP/IP packet for potential HTTP transactions by looking for IP headers with the protocol field set to TCP (=6) and TCP headers with the destination port set to HTTP (=80), in this example. Packets that match these packet filter characteristics are not forwarded to the GTP-u tunnel associated with the PDCP context from which the packet emerged. Instead the packets are diverted to the cache server 1204, via one or more protocol interface layers 1218 and via interface 1230. In this example, the interface 1230 is an Ethernet interface. In this example, the interception function 1217 may create a more specific packet filter that matches the specific TCP connection and associates this packet filter with a specific PDCP context.

Alternatively, in another example, data packets that are forwarded to the Cache server 1204 are marked in a way that enables identification of the PDCP context, thereby enabling data packets returning from the Cache server 1204 to be correctly routed in the eNodeB 1210. In this example, data packets matching the packet filter criteria are not forwarded to the GTP-u tunnel associated with the PDCP context from which the packet emerged. Instead, the Cache server 1204 receives the transmitted TCP/IP packets via interface 1230. In these example embodiments, the Cache server 1204 is configured to accept data packets with any destination address, so that the server platform upon which the cache server is implemented doesn't reject packets that are intended for the origin server.

The TCP connection manager 1208 examines the TCP header and identifies whether or not the SYN flag has been set. In this case, as the SYN flag has been set, the TCP connection manager 1208 recognises this as being a request to initiate a new TCP connection. The TCP connection manager 1208 generates a response back to the UE 1215, with matching source and destination IP addresses and ports with the SYN and ACK flags set, as per a standard connection opening procedure.

The TCP/IP packet arrives at the interception function 1217 in the eNodeB 1210. Here, the packet filters in the interception function 1217 recognises the source/destination, address/port number combinations and determines that the packet is a 'downlink' packet associated with the PDCP context from which the initial TCP packet with the matching address/port 4-tuple emerged. The interception function 1217 then outputs this data packet to the identified PDCP context 1216 for transport to the UE 1215. The UE 1215 and TCP connection manager 1208 continue to exchange packets to complete the TCP connection. The UE 1215 transmits the HTTP request for information to the origin server 1235, wherein the interception function 1217, in the eNodeB 1210, diverts packets to the Cache server 1204 (using the packet filter created by the preceding procedure) as the packets emerge from the PDCP context 1216. These packets arrive at the TCP connection manager 1208 and are recognised as belonging to an existing TCP connection.

A web-proxy function 1207 located in the Cache server 1204, accepts the HTTP request on behalf of the origin server 1235 and interprets the HTTP request from UE 1215. The Cache library manager 1206 checks its library to determine whether it has a copy of the requested object in the data storage 1205. If the requested object is available in the library, and the Cache library manager 1206 is able to confirm that the object is still valid, the appropriate HTTP response is created by the web-proxy 1207 and the object data appended, after being fetched from data storage 1205. The TCP/IP packet used to transport the HTTP response is created by the web-proxy 1207 and the packet is transmitted back to the eNodeB 1210.

In some examples, the interception function 1210 has the capability to create multiple filters for each PDCP / GTP-u contexts as there may be a plurality of origin servers that the application in the UE will access to. In some examples, the interception function 1210 determines whether to direct the packet to the PDCP context 1216 or to GTP-u tunnel 1219 based on the source/destination IP, address/port number combination. The interception function 1217 is further operable to create one or more packet filters that recognise outgoing TCP sessions created by the Cache server 1204, thereby enabling the interception function 1217 to correctly intercept any responses from the origin server and transmit these to the Cache server 1204.

If the Cache library manager 1206 determines that the requested object is not available in the library, or that the object is in the library but the Cache server 1204 must validate the object's freshness before it can be served to the UE 1215, the Cache library manager 1206 requests that the TCP connection manager 1208 initiates a connection to the origin server 1235. In this instance, the TCP connection manager 1208 formulates a TCP/IP packet using the source IP address of the UE 1215 and the destination address of the origin server 1235. The destination port is set to 80 (HTTP default port) and the source port is chosen from the range of dynamic ports, as discussed above. The SYN flag may be set to signify a request to open a TCP connection if a TCP connection to the origin server on behalf of the UE requesting the object does not already exist. The TCP/IP packet is transmitted to the eNodeB 1210, where it is received by the interception function 1217. The interception function 1217 examines the source IP address, which informs the interception function 1217 that this TCP/IP packet is an outgoing packet and, thus, is transmitted to the GTP-u tunnel 1219 before being transmitted, via the S1 interface, to the mobile core network 1220, and thereafter via the external internet connection 1225 before reaching the origin server 1235.

The origin server 1235 in this example embodiment is a dedicated server. In other example embodiments, the origin server 1235 may be another cache or web-proxy 1207.

The origin server 1235 receives the TCP/IP packet from the external Internet connection 1225 and prepares a response. If it is determined that the Cache library manager 1206 was inquiring about the freshness of the object, and the origin server 1235 determines that the copy held by the Cache library manager 1206 is still valid, then an 'un-modified' response is sent back through the network 1200. Otherwise, the response from the origin server 1235 will contain the object that was requested. In either case, the TCP/IP packet may be routed through the internet 1225 and may be presented to the PDN-gateway (not shown) of the mobile core network 1220. The mobile core network 1220 routes the TCP/IP packet to the eNodeB 1210 that is serving the UE 1215. The interception function 1217 examines the TCP/IP packets that egress from the GTP tunnel 1219 in order to match TCP sessions initiated by the Cache server 1204. Matching TCP sessions are then routed to the Cache server 1204 rather than to the associated PDCP context 1216.

The TCP connection manager 1208 accepts the TCP/IP packets from the origin server 1235 and passes the message to the web-proxy 1207. If the received message contains the requested object, the Cache library manager 1206 may decide to add the object to its library in the data storage 1205, if the cache-control headers in the HTTP message allow. If the message contains an 'un-modified' response, the Cache library manager 1206 uses the copy of the object in its library. In either case, the Cache library manager 1206 formulates a response to the UE 1215 and the TCP connection manager 1208 correctly forms the TCP/IP packet according to the TCP connection between the UE 1215 and the TCP connection manager 1208. This packet arrives at the eNodeB 1210, and the interception function 1217 examines the TCP connection (source/destination IP address/ port number), recognises the packet as being destined for the UE 1215 and presents the packet to the appropriate PDCP context 1216 for transmitting to the UE 1215 via the Uu interface. The UE 1215 receives the packet and proceeds to process it.

In example embodiments, a reference to a single packet in some instances has been used for illustrative purposes only, and in other examples the reference may be considered as encompassing multiple packets being transmitted throughout the network 1200. Similarly, in example embodiments, a reference to a single origin server in some instances has been used for illustrative purposes only, and in some examples the reference may be considered as encompassing multiple origin servers being used.

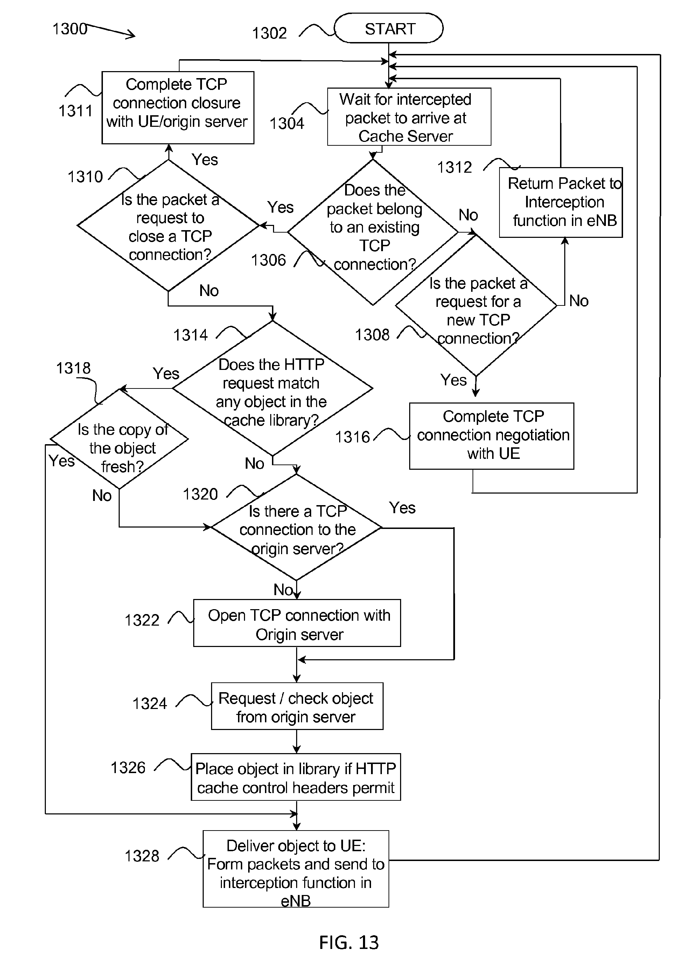

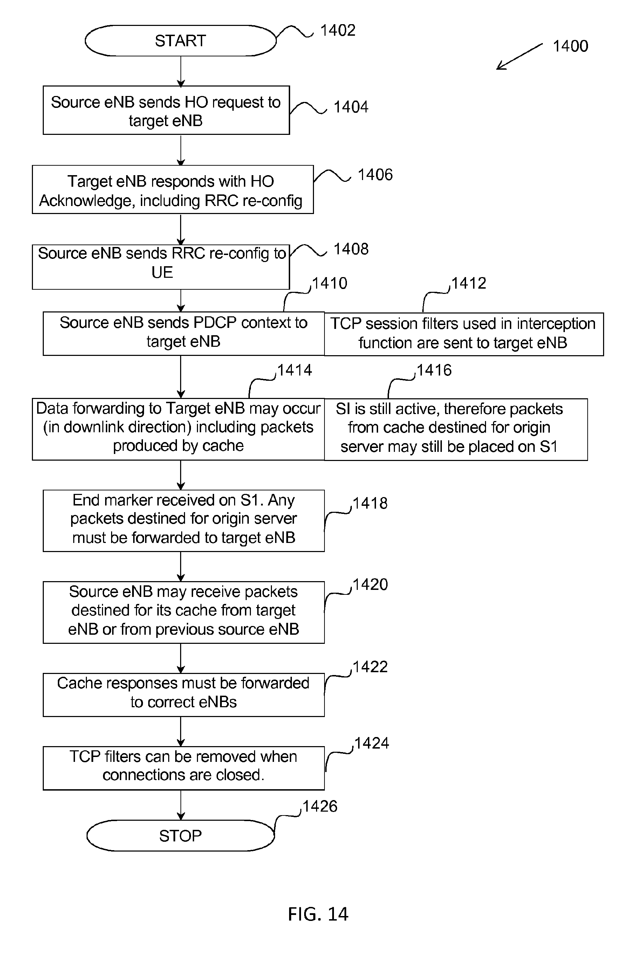

FIGs 13 and 14 illustrate simplified flowcharts relating to a further example embodiment.

FIG. 13 illustrates a simplified flow diagram 1300 of an example operation of a transparent storage device 1300 serving an eNodeB, according to an example embodiment of the invention. Initially, at 1302, the transparent storage device 1300 begins its operation, and, at 1304, waits for one or more intercepted data packets to arrive at the Cache server via, say, an interception function. At 1306 the transparent storage device determines whether the one or more intercepted data packets belong to an existing TCP connection. If the transparent storage device determines that the one or more intercepted data packets belong to an existing TCP connection in 1306, the transparent storage device determines whether the request is to close the TCP connection in 1310.

If the transparent storage device determines that the request is to close the TCP connection, it completes the TCP connection closure in 1311 with the corresponding UE and origin server. If the request in 1310 was not to close the TCP connection, the transparent storage device determines whether the HTTP request matches any object in the cache library in 1314. If the request does match an object in the cache library in 1314, the transparent storage device determines whether a copy of the object in its cache library is 'fresh', as shown in 1318. If the object is determined to be 'fresh' in 1318, the transparent storage device forms data packets and sends to the interception function in the eNodeB 1328, thereby indirectly delivering the desired object to the UE.

If the object is determined not to be 'fresh' in 1318, the transparent storage device determines whether there is an open TCP connection to the origin server on behalf of the particular UE in 1322. If there is an open TCP connection to the origin server in 1322, the transparent storage device bypasses step 1322 and checks the validity and/or requests an updated copy of the object from origin server 1324. The transparent storage device then stores a copy of the object in its library, if HTTP cache control headers permit in 1326, before forming packets and sending to the interception function in the eNodeB 1328, thereby indirectly delivering the desired object to the UE.

If the transparent storage device determines that there is not an open TCP connection to the origin server in 1320, the transparent storage device opens a TCP connection with the origin server in 1322, before continuing with operations 1324, 1326 and 1328. If the transparent storage device determines that the HTTP request does not match any object in the cache library in 1314, the data flow bypasses operation 1318 and determines whether there is a TCP connection to the origin server in 1320, and the data flow continues as previously described.

If the data packet does not belong to an existing TCP connection in 1306, the transparent storage device determines whether the data packet is a request for a new TCP connection in 1308. If the data packet is a request for a new TCP connection, the transparent storage device completes TCP negotiation with the UE in 1316; otherwise the transparent storage device returns the data packet to the interception function in the eNodeB for forwarding on to the original destination address in 1312.

FIG's. 14 and 15 illustrate simplified flow diagrams 1400, 1500 of an example of an operation of a source eNodeB and a target eNodeB respectively during a handover operation, according to example embodiments of the invention. To aid understanding of the operational aspects of FIG's 14 and 15, they may be viewed in light of FIGs 10 and 11 respectively, in order to understand the background processes before a handover request is initiated and after it has been implemented.

Initially, a UE requests an object from an origin server. This request is intercepted by an interception function within a source eNodeB, and diverted to a source transparent storage device. The interception function in the eNodeB keeps a record of TCP connections that are terminated in the transparent storage device. Further, connections between UE and transparent storage device and transparent storage device and origin server are monitored by the interception function. Content is then delivered to the UE via the transparent storage device or the origin server. In another embodiment, content is delivered from a transparent storage device situated elsewhere in the mobile core network. In a further embodiment, content is delivered from a transparent storage device situated elsewhere within the internet.

At 1402, the source eNodeB determines that, for example due to current UE operating conditions, a handover is required. Once the handover decision has been made by the source eNodeB, a handover request message is transmitted 1404, either via a direct path (typically over the X2 link) or via an MME, to the target eNodeB. The target eNodeB receives the handover request message 1504 from the source eNodeB, and subsequently performs admission control and, further, responds by transmitting a handover request acknowledgement message 1506, either via a direct path (typically over the X2 link) or via the MME, to the source eNodeB.

In this example embodiment, the handover acknowledgement message includes a radio resource control (RRC) reconfiguration message transmitted to the source eNodeB in a transparent container for forwarding to the UE. At step 1406 the source eNodeB receives the handover response from the target eNodeB. In response to step 1406, the source eNodeB transmits the RRC reconfiguration message to the UE 1408, as well as transmitting PDCP context information in an eNodeB status transfer message to the target eNodeB 1500 at step 1410. In order to successfully effect the handover when the eNodeB is associated with a transparent storage device, packet filters used by the interception function are transmitted to the target eNodeB at step 1412, with an indication that identifies the source eNodeB where the transparent storage device is located.

In another embodiment, TCP connection state information is also transmitted in step 1412. The target eNodeB receives the PDCP context information from the source eNodeB at 1508, as well as receiving packet filter information to enable a successful lossless handover to be effected at 1510. At 1414, packets that are generated by the transparent storage device, or received by the source eNodeB from an origin server may be forwarded to the target eNodeB over a data forwarding path over X2 interface. In another embodiment the data forwarding path may use the S1 interface via a S-GW (including the case of a S-GW relocation) if direct forwarding (i.e. over X2) is not available. Packets that are generated by the transparent storage device that are destined for the origin server may still be transmitted via the S1 interface at this point 1416. As operations at 1510, 1412, 1508 and 1510 have been successfully effected, it is now possible for the UE to access the target eNodeB using random access channels (RACH). In response, the target eNodeB transmits uplink allocation and timing advance information to the UE at 1512. In response to this message, the UE transmits an RRC 'reconfiguration complete' message to the target eNodeB, which is received by the target eNodeB at step 1514. At step 1516 the target eNodeB may begin transmitting packets to the UE. At this point, packets that have arrived from the UE that are destined for the transparent storage device in the source eNodeB must be routed to the source eNodeB via the direct/indirect data forwarding tunnel, for example via an X2 interface or S1 forwarding via S-GW.

In order to effect the handover efficiently (for example substantially losslessly), packets transmitted from the source eNodeB transparent storage device to the source eNodeB have to be filtered by the source eNodeB interception function and forwarded to the target eNodeB. In this manner, the interception function in the target eNodeB may determine if these packets are destined for the UE (in which case the packets are transmitted to the PDCP context) or the origin server (in which case the packets are transmitted to the GTP-u tunnel) at 1518. At 1520 the target eNodeB transmits a handover notify message to the mobility management entity (MME) which, in turn, transmits a modify bearer request to the S-GW. The S-GW then begins to transmit user data to the target eNodeB at 1522, as well as transmitting an end marker to the source eNodeB. The end marker allows the source eNodeB to start to tear down GTP tunnels that were previously used for transporting user plane data between the S-GW and the source eNodeB.

In some examples, it is noted that normal handover procedures may also delete the data forwarding tunnels on the S1 that are used for data forwarding from source eNodeB to target eNodeB, for example if S1 is used for data forwarding This tunnel release procedure may be triggered by the expiry of a timer in the MME, The timer value may be selected to provide the eNodeB a sufficient time in which to forward data to the target eNodeB, Upon timer expiry the MME sends a delete indirect data forwarding tunnel request to the S-GW. When the transparent storage device in the source eNodeB retains open TCP connections with the UE and origin server, the data forwarding tunnels need to be maintained for an indefinite period, such that data can flow between the transparent storage device in the source eNodeB and the target eNodeB. These tunnels may be kept open by the source S-GW rejecting the delete forwarding tunnel request from the MME whilst active TCP sessions are still on-going. Only after all open TCP connections have closed will the source S-GW proceed to delete the forwarding tunnels.

In this example embodiment the interception function in the source eNodeB will generate an in-band signal (end-marker) that is transmitted over the data forwarding tunnels to the S-GW. The S-GW will recognise the end-marker and will proceed to delete the indirect data forwarding tunnels. The S-GW will also forward the end-marker to the target eNodeB, where it is recognised by the interception function in the target eNodeB and causes the packet filters corresponding to the TCP sessions with the source eNodeB to be removed.

After handover has completed, the user plane data path has been moved from the source eNodeB to the target eNodeB. The transparent storage device may still have active connections with the origin server and packets destined for the origin server from the transparent storage device in the source eNodeB are forwarded to the target eNodeB to allow the packets to be routed towards the origin server by the mobile core network via the S1 user plane data path. Similarly, any packets from the origin server that are destined for the transparent storage device at the source eNodeB 1400 will be routed to the target eNodeB by the routing policy in the mobile core network. Data forwarding paths described previously may be used to transfer data between source eNodeB and target eNodeB.

In some examples, it is possible for the UE to perform many handovers over the duration of a session. In such an example, it is likely that there will be a sequence of source/target eNodeBs and the target eNodeB in the current handover procedure will therefore become the source eNodeB for the next handover procedure. It is also possible that all the eNodeBs that have served a UE and have an associated transparent storage device may have open TCP sessions with the UE and origin servers. Therefore, in this example, the current source eNodeB forwards all interception function filter information associated with the UE, including information obtained from the previous source eNodeB to the next target eNodeB. In one example embodiment, the current source eNodeB will transfer the filter information to the target eNodeB and the current source eNodeB will retain the information identifying the association between TCP sessions and previous source eNodeB. The current target eNodeB will intercept packets and forward them to the source eNodeB as required using procedures previously described. The source eNodeB will then route packets matching the packet filters provided by the previous source eNodeB over existing data forwarding tunnels to the previous source eNodeB.

As a result, the source eNodeB may receive packets destined for its transparent storage device from the target eNodeB, or packets destined for a transparent storage device in a previous source eNodeB, or packets destined for the UE from a transparent storage device in a previous source eNodeB at step 1420. Therefore, these packets must be forwarded to the correct eNodeBs 1422. Data forwarding may continue until the TCP connections are closed, at which point the TCP filters can be removed 1424.

In order to support the transparent storage devices in the above example embodiments, the intercept function at the target eNodeB needs to be informed of TCP connections terminated at the source eNodeB. In this example this is achieved by implementing the interception function in the source eNodeB to send parameters that define all TCP sessions associated with a particular UE (including TCP connections between the UE and source transparent storage device and connections between the source transparent storage device and the origin servers), to the interception function in the target eNodeB 1400. The interception function in the target eNodeB is then operable to divert packets matching the specified TCP connections to the correct transparent storage device.

It is assumed that the target eNodeB knows which source eNodeB the TCP information has originated from, therefore it is not necessary to signal this information separately. However, in another embodiment, the target eNodeB is not aware of which source eNodeB the TCP information originated from and, therefore, information relating to the source eNodeB must be sent in addition to the TCP information. In this embodiment, the interception function at the target eNodeB is able to store the identity of the source eNodeB from which it received the TCP connection identifiers. This allows for daisy-chaining if the source eNodeB forwards information about TCP sessions it received when it was itself acting as a target eNodeB to the current target eNodeB.

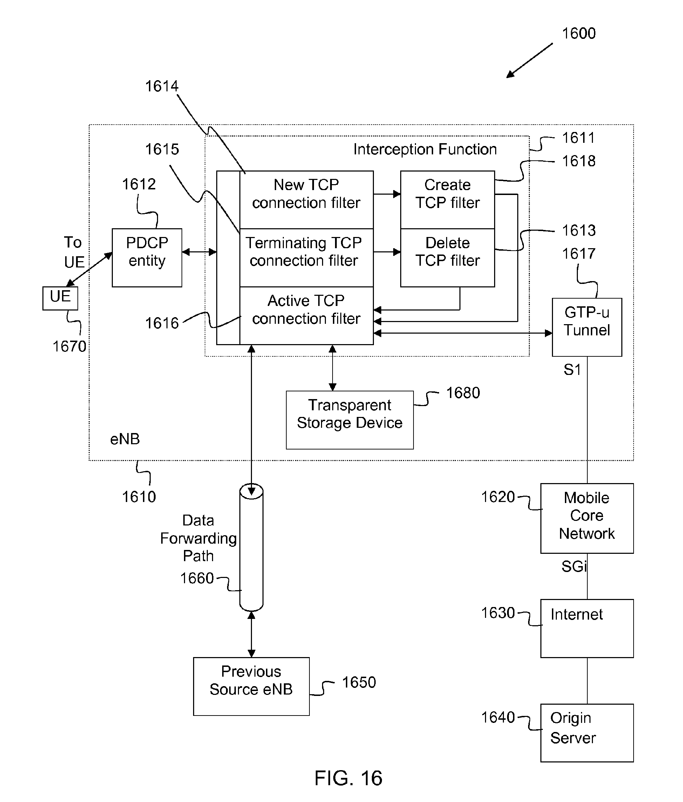

Referring now to FIG. 16, the functionality of a simplified example of an interception function 1611 located internal to the base station (for example an eNodeB 1610) and its context within a wider communication system 1600 is illustrated. Data transfers between a UE 1670 and an origin server 1640 occur via the eNodeB 1610, mobile core network 1620 and internet 1630. A transparent storage device 1680 is logically located within the eNodeB 1610 and is operable to store popular content provided by the origin server 1640. In order for the transparent storage device 1680 to provide data objects on behalf of the origin server 1640, the eNodeB 1610 may employ an interception function 1611 to intercept user plane packets at a convenient point.

In one example embodiment the interception point may be the interface between a PDCP entity 1612 and one or more GTP-u 1617 protocol entities (as described with reference to FIG. 11). Packets arriving at the interception function 1611 from a PDCP entity 1612 are examined for new TCP connection requests by a packet filter 1614, which matches the header characteristics of a new TCP connection request. If a new TCP connection request is identified, a specific TCP packet filter for this potential session is created 1618 and placed within a list of active TCP packet filters 1616.

Packets delivered to the interception function from the GTP-u 1617, transparent storage device 1680, data forwarding path 1660 and PDCP entity 1612 are examined for the characteristics of a TCP session termination. If a TCP connection termination is identified, the matching packet filter in the list of active TCP packet filters 1616 is deleted 1613 from the list. Packets delivered to the interception function 1611 from the GTP-u 1617, transparent storage device 1680, data forwarding path 1660 and PDCP entity 1612 are matched against the list of active TCP packet filters 1616 and delivered to the appropriate destinations. Any packets that match the characteristics of TCP sessions between the UE 1670 and the transparent storage device 1680 are directed to the UE 1670 if the destination address corresponds to the UE address, and packets are delivered to the transparent storage device 1680 if the source address corresponds to the UE address. Any packets that match the characteristics of TCP sessions between the transparent storage device 1680 and the origin server 1640 are directed to the transparent storage device 1680 if the destination address corresponds to the UE address and packets are delivered to the origin server if the source address corresponds to the UE address. Any packets that match characteristics of TCP connections with a transparent storage device associated with a previous source eNodeB 1650 are handled in the same way; however any packets destined for, or sourced from, the transparent storage device associated with a previous source eNodeB 1650 are transported on the data forwarding path 1660 between the eNodeB 1610 and previous source eNodeB 1650.

In this example embodiment, when TCP sessions are closed, the interception functions may inspect the packets being diverted in order to detect when FIN flags are set, and to clear out any contexts. In another example embodiment, the interception functions may simply clear out contexts that are 'stale' and have not transported data for some pre-defined period of time, with an assumption that these connections have been closed, therefore avoiding the need to proactively inspect the data packets for TCP terminations.

There are a plurality of options for implementing the interface between the interception function in the eNodeB and the TCP connection manager in the transparent storage device. For example, one example may be to connect the transparent storage device onto an IP network used for core networks. This may provide the transparent storage device with a unique IP address in the same manner as is traditionally provided for eNodeBs and other network elements. This may also allow all transparent storage devices to be visible from all eNodeBs in the network. The network may rely on locally distributed routers/switches to ensure that transparent storage device traffic is routed efficiently between eNodeB and transparent storage devices, thereby keeping traffic away from the main trunk connections wherever possible.

Another possible option for implementing the above interface would be to implement the interface between an eNodeB and transparent storage device as a private interface, which only the eNodeB and transparent storage device could use. Communication between the target eNodeB and source eNodeB transparent storage device may occur over an inter-eNodeB connection, such as an X2 interface.

To summarise, some example embodiments of the invention relate to incorporating a transparent storage device to intercept user-plane traffic at the PDCP/GTP-u transition. The transparent storage device functions in a similar manner to that of cache servers in a fixed network infrastructure. However, proxied TCP sessions with an origin server are made with the IP address of the corresponding UE, rather than the IP address of the cache server. Routing tables in the internet will direct traffic from an origin server to a mobile network, and mobility functions in the EPC will route user-plane traffic to the correct eNodeB. Mobility handovers are supported by including TCP session descriptors, for example within the handover preparation message. This informs the target eNodeB of any TCP sessions that exist between the UE and source transparent storage device. Traffic is transported between eNodeBs using existing interfaces, such as an X2 interface, or alternatively via an alternative data forwarding path that is provided by the underlying transport network used to interconnect elements of the mobile core network. As discussed above, a target eNodeB does not require a transparent storage device in order to accept a handover from a source eNodeB where another transparent storage device is involved, providing the target eNodeB implements the necessary interception functionality.

In another example embodiment, it is possible to support multiple handovers occurring in a relatively short time frame. In this case, it may be possible for the UE to have open sessions with transparent storage devices in more than two eNodeBs. In order to account for this situation in this example, the current source eNodeB may also include information provided to it by other eNodeBs when it was considered to be a target eNodeB. This approach may, at first glance, appear inefficient to a person skilled in the art; however there are a number of factors that need to be considered. For example, persistent TCP connections used for HTTP transfers are typically short-lived and will naturally terminate once data has been delivered (after a short time-out). It is therefore unlikely that a significant number of TCP sessions will be accumulated across multiple eNodeBs. Traffic is most likely only tunnelled between eNodeBs for a short time surrounding a handover event. Further, traffic transported between eNodeBs is likely to be restricted to local networking routes by switches and routers topologically close to the eNodeBs. Thus, the core network infrastructure topologically located closer to the S-GW will be protected from the increase in inter-eNodeB traffic.

Example embodiments of the present invention have been discussed with reference to cache(s), cache servers, transparent storage devices or data storage. All these terms are interchangeable and relate, at least, to arrangements for detecting and storing data. Further, these terms broadly define the concept of providing a data store or of processing stored data in a data store.

Further, it should be noted that an eNodeB, base station or link between a base station and a transparent storage device are, in this application, considered to be encompassed by a network element.

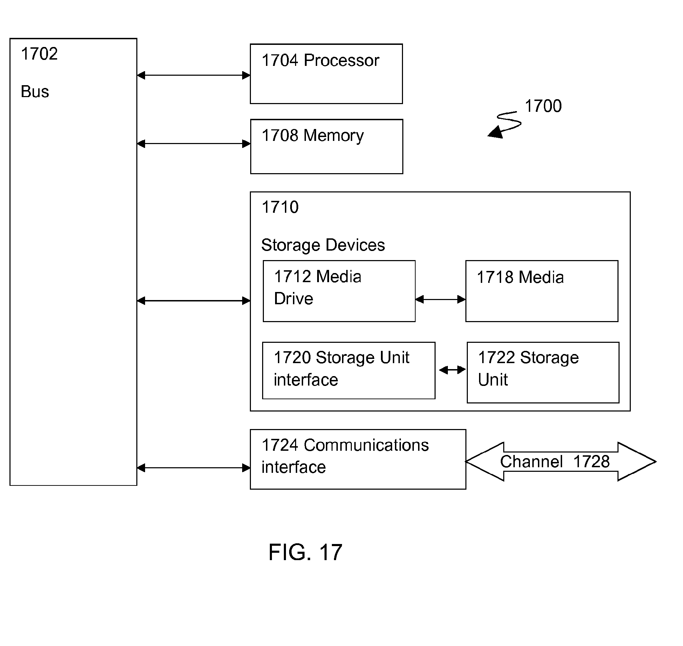

Referring now to FIG. 17, there is illustrated a typical computing system 1700 that may be employed to implement software controlled use of caches/transparent storage devices in embodiments of the invention. Computing systems of this type may be used in wireless communication units, such as base stations, NodeBs, eNodeBs or other such wireless network elements. Those skilled in the relevant art will also recognize how to implement the invention using other computer systems or architectures. Computing system 1700 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 1700 can include one or more processors, such as a processor 1704. Processor 1704 can be implemented using a general or special-purpose processing engine such as, for example, a microprocessor, microcontroller or other control logic. In this example, processor 1704 is connected to a bus 1702 or other communications medium.

Computing system 1700 can also include a main memory 1708, such as random access memory (RAM) or other dynamic memory, for storing information and instructions to be executed by processor 1704. Main memory 1708 also may be used for storing temporary variables or other intermediate information during execution of instructions to be executed by processor 1704. Computing system 1700 may likewise include a read only memory (ROM) or other static storage device coupled to bus 1702 for storing static information and instructions for processor 1704.

The computing system 1700 may also include information storage system 1710, which may include, for example, a media drive 1712 and a removable storage interface 1720. The media drive 1712 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 1718 may include, for example, a hard disk, floppy disk, magnetic tape, optical disk, CD or DVD, or other fixed or removable medium that is read by and written to by media drive 1712. As these examples illustrate, the storage media 1718 may include a computer-readable storage medium having particular computer software or data stored therein.

In alternative embodiments, information storage system 1710 may include other similar components for allowing computer programs or other instructions or data to be loaded into computing system 1700. Such components may include, for example, a removable storage unit 1722 and an interface 1720, such as a program cartridge and cartridge interface, a removable memory (for example, a flash memory or other removable memory module) and memory slot, and other removable storage units 1722 and interfaces 1720 that allow software and data to be transferred from the removable storage unit 1718 to computing system 1700.

Computing system 1700 can also include a communications interface 1724. Communications interface 1724 can be used to allow software and data to be transferred between computing system 1700 and external devices. Examples of communications interface 1724 can include a modem, a network interface (such as an Ethernet or other NIC card), a communications port (such as for example, a universal serial bus (USB) port), a PCMCIA slot and card, etc. Software and data transferred via communications interface 1724 are in the form of signals which can be electronic, electromagnetic, and optical or other signals capable of being received by communications interface 1724. These signals are provided to communications interface 1724 via a channel 1728. This channel 1728 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 1708, storage device 1718, or storage unit 1722. These and other forms of computer-readable media may store one or more instructions for use by processor 1704, to cause the processor to perform specified operations. Such instructions, generally referred to as 'computer program code' (which may be grouped in the form of computer programs or other groupings), when executed, enable the computing system 1700 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 1700 using, for example, removable storage drive 1722, drive 1712 or communications interface 1724. The control logic (in this example, software instructions or computer program code), when executed by the processor 1704, causes the processor 1704 to perform the functions of the invention as described herein.

In one example, a tangible non-transitory computer program product comprises executable program code operable for, when executed at the first wireless network element: intercepting a communication from the wireless communication unit to a second network element; inspecting the communication to determine whether the communication relates to a request for a first item of information; requesting the first item of information from the data store, wherein the control processor is further arranged to not forward the request for the first item of information to the second network element if it is determined that first item of information is stored in the data store; receiving the first item of information from the data store; and transmitting the first information to the wireless communication unit.

It will be appreciated that, for clarity purposes, the above description has described embodiments of the invention with reference to different functional units and processors. However, it will be apparent that any suitable distribution of functionality between different functional units or processors is possible, without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

Those skilled in the art will recognize that the functional blocks and/or logic elements herein described may be implemented in an integrated circuit for incorporation into one or more of the communication units. One example of the integrated circuit that is suitable for a network element for communicating with a wireless communication unit. The integrated circuit for a wireless communication unit comprises: an interface for operably coupling to a data store; and a control processor, operably coupled to the interface, and arranged to: intercept a communication from the wireless communication unit to a second network element, inspect the communication to determine whether the communication relates to a request for a first item of information; request the first item of information from the data store, wherein the control processor is further arranged to not forward the request for the first item of information to the second network element if it is determined that first item of information is stored in the data store; receive the first item of information from the data store; and transmit the first information to the wireless communication unit.

Furthermore, it is intended that boundaries between logic blocks are merely illustrative and that alternative embodiments may merge logic blocks or circuit elements or impose an alternate composition of functionality upon various logic blocks or circuit elements. It is further intended that the architectures depicted herein are merely exemplary, and that in fact many other architectures can be implemented that achieve the same functionality.

Although the present invention has been described in connection with some example embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

## Claims

1. A network element for communicating with a wireless communication unit, wherein the network element comprises:
a transceiver for communicating with the wireless communication unit;
an interface for operably coupling to a data store;
a control processor, operably coupled to the interface, and arranged to:
intercept a communication from the wireless communication unit to a second network element,
inspect the communication to determine whether the communication relates to a request for a first item of information;
request the first item of information from the data store, wherein the control processor is further arranged to not forward the request for the first item of information to the second network element if it is determined that first item of information is stored in the data store;
receive the first item of information from the data store; and
transmit the first information to the wireless communication unit.

2. The network element of claim 1, wherein in response to determining that the communication relates to a request for a first item of information that is not stored in the data store, the control processor is further arranged to request the first item of information from the second network element.

3. The network element of claim 2, wherein the control processor is further arranged to store a copy of the first item of information in the data store when received from the second network element.

4. The network element of any preceding claim, wherein the control processor is further arranged to determine whether a validity check of the first item of information is less than a first period of time.

5. The network element of claim 4 wherein the validity check comprises at least one from the following group: checking an age of an item with an age threshold; checking a length of time that an item has been resident in a store without being updated; referring back to a second network element; an action identified in at least part of a message header.

6. The network element of any preceding claim, wherein the control processor is further arranged to perform at least one from a group of:
act as a proxy for the communication between the wireless communication unit and the second network element;
respond to a handover decision and determine therefrom information that identifies at least one open proxy connection that is associated with the wireless communication unit.

7. The network element of Claim 6 wherein the control processor is further arranged to transfer the at least one open proxy connection to a recipient entity identified in the handover decision.

8. The network element of claim 6, wherein the data store functions at an application layer level and the proxy connection supports data packets transported via at least one from a group comprising:
Transport Control Protocol (TCP) connection request, User Datagram Protocol (UDP), Stream Control Transmission Protocol (SCTP).

9. The network element of any preceding claim, wherein a source internet protocol (IP) address of the wireless communication unit is used when requesting the first item of information from the second network element.

10. The network element of any preceding Claim wherein the control processor is further arranged to intercept the communication and determine whether the intercepted communication matches at least one traffic characteristic.

11. The network element of Claim 10 wherein the at least one traffic characteristic comprises at least one from a group of:
an Internet protocol related characteristic;
an Internet protocol related characteristic in a form of at least one from a group of: IP version number, IP source address, IP destination address, differentiated services code point (DCHP), a flow class value, a transport protocol number;
a transport protocol related characteristic;
a transport protocol related characteristic in a form of at least one from a group of: transport protocol source port number, transport protocol destination port number, a transport protocol flag,
application information;
application information in a form of at least one from a group of: a header item, an application command.

12. The network element of any preceding Claim wherein the network element is at least one from a group comprising: a base station, a NodeB, an evolved NodeB, a Packet data network Gateway (P-GW), a serving gateway (S-GW).

13. An integrated circuit for a network element for communicating with a wireless communication unit, wherein the integrated circuit comprises:
an interface for operably coupling to a data store;
a control processor, operably coupled to the interface, and arranged to:
intercept a communication from the wireless communication unit to a second network element,
inspect the communication to determine whether the communication relates to a request for a first item of information;
request the first item of information from the data store, wherein the control processor is further arranged to not forward the request for the first item of information to the second network element if it is determined that first item of information is stored in the data store;
receive the first item of information from the data store; and
transmit the first information to the wireless communication unit.

14. A method for a network element operably coupled to a data store for communicating with a wireless communication unit, wherein the method comprises, at the network element:
intercepting a communication from the wireless communication unit to a second network element;
inspecting the communication to determine whether the communication relates to a request for a first item of information;
requesting the first item of information from the data store, wherein the control processor is further arranged to not forward the request for the first item of information to the second network element if it is determined that first item of information is stored in the data store;
receiving the first item of information from the data store; and
transmitting the first information to the wireless communication unit.

15. A non-transitory computer program product comprising executable program code for communicating with a wireless communication unit, the executable program code operable for, when executed at a network element, performing the method of Claim 14.
